(19) Europäisches Patentamt

European Patent Office

Office européen des brevets

(11) **EP 1 007 869 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(21) Anmeldenummer: **98902994.7**

(22) Anmeldetag: **10.01.1998**

(51) Int Cl.7: **F16H 61/46**, F16H 47/04

(86) Internationale Anmeldenummer:
**PCT/EP98/00115**

(87) Internationale Veröffentlichungsnummer:
**WO 98/31954 (23.07.1998 Gazette 1998/29)**

(54) **VERFAHREN ZUR STEUERUNG EINES STUFENLOSEN GETRIEBES**

METHOD FOR CONTROLLING A CONTINUOUSLY VARIABLE TRANSMISSION

PROCEDE POUR COMMANDER UNE TRANSMISSION CONTINUE VARIABLE

(84) Benannte Vertragsstaaten:
**AT DE FR GB IT**

(30) Priorität: **18.01.1997 DE 19701642**

(43) Veröffentlichungstag der Anmeldung:
**14.06.2000 Patentblatt 2000/24**

(73) Patentinhaber: **ZF FRIEDRICHSHAFEN Aktiengesellschaft**
**88038 Friedrichshafen (DE)**

(72) Erfinder:
 • **PATON, Robert**
  **D-94034 Passau (DE)**
 • **NIKOLAUS, Heinrich**
  **D-22043 Hamburg (DE)**

(56) Entgegenhaltungen:
**EP-A- 0 352 110**  EP-A- 0 429 517
**US-A- 4 170 153**  US-A- 4 852 429
**US-A- 5 376 056**  US-A- 5 560 203

**Beschreibung**

Die Erfindung betrifft ein Verfahren zur Steuerung eines stufenlosen Getriebes mit den Maßnahmen nach dem Oberbegriff von Anspruch 1. Als nächstliegender Stand der Technik ist die US-A-5 560 203 anzusehen.

Aus der Patentschrift EP 0 429 517 B1 ist ein stufenloses Getriebe mit einem hydrostatischen und einem mechanischen Leistungszweig bekannt. Bei derartigen Getrieben summiert ein Summierungsgetriebe die Leistung der beiden Leistungszweige und leitet sie gegebenenfalls über ein mechanisches Schaltgetriebe zu einem Fahrzeugantrieb. Ist der mechanische Leistungszweig durch eine Kupplung unterbrochen, überträgt der hydraulische Leistungszweig die gesamte Leistung. Ist der Hydrostat auf Null gestellt, überträgt der mechanische Leistungszweig die gesamte Leistung. Zwischen diesen beiden Betriebspunkten wird die Leistungsaufteilung von der Ansteuerung des Hydrostaten bestimmt.

Der Hydrostat besteht aus einer Pumpe und einem hydrostatischen Motor, von denen mindestens eine Einheit regelbar ist. Druck und Fördervolumen bzw. Schluckvolumen in der Zeiteinheit bestimmen die Leistung des hydrostatischen Leistungszweigs. Das Verhältnis des Fördervolumens der Pumpe zum Schluckvolumen des hydrostatischen Motors ergibt die Übersetzung oder Wandlung des Hydrostaten.

Je höher die Leistung und je größer der Wandlungsbereich ist, desto größer muß der Hydrostat sein. Hydrostate, insbesondere große Hydrostate, sind zwar gut stufenlos zu regeln, haben aber gegenüber mechanischen Getrieben einen schlechteren Wirkungsgrad und erfordern einen höheren Bauaufwand. Um den Hydrostaten klein zu halten, wird der Gesamtübersetzungsbereich des Getriebes durch ein mehrstufiges Schaltgetriebe in mehrere Vorwärts- und Rückwärtsfahrbereiche unterteilt. In jedem Fahrbereich durchfährt der Hydrostat seinen gesamten Verstellbereich vom Maximum zum Minimum oder umgekehrt. In den Endstellungen erreichen die zu schaltenden Schaltelemente des Schaltgetriebes Synchrondrehzahl, so daß ruckfrei geschaltet werden kann. Hierzu verwendet man in der Regel kraftschlüssige Lamellenkupplungen, die von hydraulischen Betätigungseinrichtungen geschaltet werden.

Ferner erreicht oder durchläuft der Hydrostat einmal in jedem Bereich die Nullstellung, in der die gesamte Leistung mechanisch mit dem bestem Wirkungsgrad übertragen wird. Daher werden die Getriebe so ausgelegt, daß Betriebspunkte, in denen das Getriebe sehr häufig betrieben wird, in Drehzahlbereichen des Getriebes mit einem hohen mechanischen Übertragungsanteil der Leistung liegen. Durch diese Maßnahme und durch zahlreiche Fahrbereiche erhält man Getriebe mit günstigen Wirkungsgraden. Allerdings nimmt mit der Anzahl der Fahrbereiche und Getriebestufen die Anzahl der Kupplungsschaltvorgänge zu. Ansprechbzw. Reaktionsund Verstellzeiten der hydraulischen Betätigungseinrichtungen führen zu langen Schaltvorgängen und zu Verlusten, wodurch der Wirkungsgrad verschlechtert wird.

Vor diesem Hintergrund besteht die Aufgabe der Erfindung darin, die Schaltvorgänge insgesamt zu optimieren, insbesondere zu verkürzen.

Die Aufgabe wird erfindungsgemäß durch die Maßnahmen des Anspruchs 1 gelöst, während vorteilhafte Ausgestaltungen und Weiterbildungen der Erfindung den Unteransprüchen entnommen werden können.

Üblicherweise werden Schaltsignale ausgelöst, wenn eine Schalt- bzw. Synchrondrehzahl erreicht wird. Danach vergeht eine Ansprech- bzw. Reaktionszeit und eine Verstellzeit bis die Schaltelemente geschlossen sind. Es befindet sich also ein Zeitraum zwischen dem Auslösen der Schaltsignale beim Erreichen der Synchrondrehzahl und dem tatsächlichen Schaltpunkt, wodurch der Schaltvorgang unnötig verlängert und der Gesamtwirkungsgrad verschlechtert wird.

Erfindungsgemäß wird der Zeitraum zwischen dem Auslösen der Schaltsignale und dem tatsächlichen Schaltpunkt durch eine Steuereinheit kompensiert. Die Steuereinheit löst um den Zeitraum vor dem Erreichen der Schalt- bzw. Synchrondrehzahl das Schaltsignal aus, so daß vorzugsweise der tatsächliche Schaltpunkt unmittelbar auf den Zeitpunkt fällt, bei dem die Synchrondrehzahl erreicht wird. Der Schaltvorgang wird dadurch verkürzt und der Gesamtwirkungsgrad verbessert.

Die Übersetzung bzw. der Zeitpunkt, wann das Schaltsignal ausgelöst werden muß, wird erfindungsgemäß abhängig von der zeitlichen Änderung des Schwenkwinkels einer Schwenkscheibe ermittelt. Er läßt sich mit folgender Gleichung berechnen:

$$t_{sk} = t_{so} - \frac{\alpha_2 - \alpha_1}{t_2 \; t_1} \cdot k_k = t_{so} - \frac{d\alpha}{dt} \cdot k_k$$

$t_{so}$ = tatsächlicher Schaltpunkt
$t_{sk}$ = Zeitpunkt zum Auslösen des Schaltsignals
$\alpha_2, \alpha_1$ = Scheibenwinkel zum Zeitpunkt $t_2$ bzw. $t_1$
$k_k$ = Anpassungsfaktor

Bei einem hydraulischen Leistungszweig befindet sich zwischen Stellsignal, wie beispielsweise Stopp-, Startsignal und ein die Winkelgeschwindigkeit veränderndes Signal einer Schwenkscheibe usw., und der tatsächlichen Reaktion des hydraulischen Leistungszweigs ebenfalls eine Ansprechbzw. Reaktionszeit, häufig auch als Nachlaufzeit bezeichnet. Dies führt insbesondere beim Stoppsignal einer Schwenkscheibenbetätigung dazu, daß diese über einen Zielwinkel hinaus verstellt wird. Dadurch entsteht ein Überschuß der Hydrostatbetätigung bzw. eine nicht erforderliche Druckspitze in einem Hydrostatarbeitskreislauf. Beim Schaltvorgang geht dadurch unnötig Energie verloren, Bauteile, wie beispielsweise Dichtungen, werden unnötig belastet. Ferner muß, um eine ruckfreies Schalten zu erreichen, die Zugkraft durch ein Hydrostat-Bypass-Ventil unterbrochen werden.

Es wird vorgeschlagen, die Ansprech- und Verstellzeiten bzw. Nachlaufzeiten des hydraulischen Leistungszweigs durch eine Steuereinheit zu berücksichtigen. Insbesondere beim Stoppsignal der Schwenkscheibenbetätigung wird um einen entsprechenden Zeitraum vor dem Erreichen des Zielwinkels ein Signal ausgelöst, so daß sich die Schwenkscheibe nach dem Signal exakt auf den Zielwinkel einstellt. Ein Überschuß der Hydrostatbetätigung wird vermieden und ein ruckfreies Schalten ohne Zugkraft unterbrechung mittels eines Hydrostat-Bypass-Ventils ist möglich.

Der Zeitpunkt, wann das Signal ausgelöst werden muß, wird vorzugsweise abhängig von der zeitlichen Änderung des Schwenkwinkels, sprich von der Winkelgeschwindigkeit, nach folgender Gleichung berechnet:

$$t_\alpha = t_{\alpha_0} - \frac{\alpha_2 - \alpha_1}{t_2 - t_1} \cdot k_\alpha = t_{\alpha_0} - \frac{d\alpha}{dt} \cdot k_\alpha$$

$t_\alpha$ =     Zeitpunkt zum Auslösen eines Stoppsignals einer Schwenkscheibenbetätigung

$t_{\alpha 0}$ =     Theoretischer Zeitpunkt zum Auslösen eines Stoppsignals einer Schwenkscheibenbetätigung

$\alpha_2, \alpha_1$ =     Scheibenwinkel zum Zeitpunkt $t_2$ bzw. $t_1$

$k_\alpha$ =     Anpassungsfaktor

In der Beschreibung und in den Ansprüchen sind zahlreiche Merkmale im Zusammenhang dargestellt und beschrieben. Der Fachmann wird die Merkmale zweckmäßigerweise auch einzeln betrachten und zu weiteren sinnvollen Kombinationen zusammenfassen.

In der Zeichnung ist ein Ausführungsbeispiel der Erfindung dargestellt.

Es zeigen:

Fig. 1     eine schematische Darstellung eines stufenlosen Getriebes;

Fig. 2     einen Verlauf eines Stellwinkels einer Schwenkscheibe über der Zeit mit einem Zeitpunkt $t_{sk}$ zum Auslösen eines Schaltsignals;

Fig. 3     einen Verlauf eines Stellsignals über der Zeit und

Fig. 4     einen Verlauf eines tatsächlichen Stellwinkels einer Schwenkscheibe.

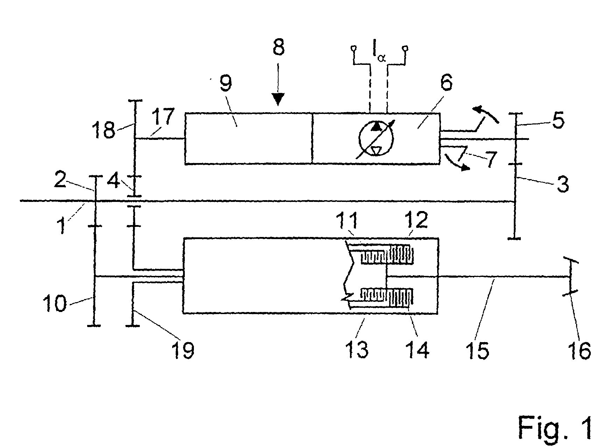

Die Fig. 1 zeigt schematisch ein stufenloses Getriebe, das von einer nicht dargestellten Antriebsmaschine über eine Antriebswelle 1 angetrieben wird, auf der zwei Zahnräder 2 und 3 fest und ein weiteres 4 drehbar montiert sind.

Das Zahnrad 3 treibt über ein weiteres Zahnrad 5 eine hydraulische Verstellpumpe 6 mit einer Schwenkscheibe 7 an, deren Schwenkwinkel $\alpha$ das Fördervolumen der Verstellpumpe 6 bestimmt. Die Schwenkscheibe 7 wird elektrisch verstellt, wobei der Schwenkscheibensteuerstrom I ein Maß für den Schwenkwinkel $\alpha$ ist.

Die Verstellpumpe 6 gehört zu einem Hydrostaten 8, der neben der Verstellpumpe 6 einen Hydromotor 9 hat und Hauptbestandteil des hydraulischen Leistungszweiges ist.

Das Zahnrad 2 treibt ein Zahnrad 10 am Eingang eines mechanischen Leistungszweiges an, zu dem ein nicht näher dargestelltes Summierungsgetriebe und ein hydraulisch geschaltetes mechanisches Schaltgetriebe in Planetenbauweise gehören. Schaltgetriebe in Vorgelegebauweise sind ebenfalls verwendbar. Schaltkupplungen mit Lamellen für das Schaltgetriebe sind mit 11, 12, 13 und 14 bezeichnet. Sie verbinden das Getriebe in der jeweiligen Fahrstufe mit einer Abtriebswelle 15, auf der ein Fahrantriebskegelrad 16 montiert ist.

Der Hydrostat 8 ist über seine Ausgangswelle 17, einem Zahnrad 18, dem Zahnrad 4 und einem weiteren Zahnrad 19 trieblich mit dem Summierungsgetriebe verbunden.

Die Schwenkscheibe 7 und die Schaltkupplungen 11 - 14 werden von einer oder von zwei nicht näher dargestellten Steuerungseinheiten gesteuert.

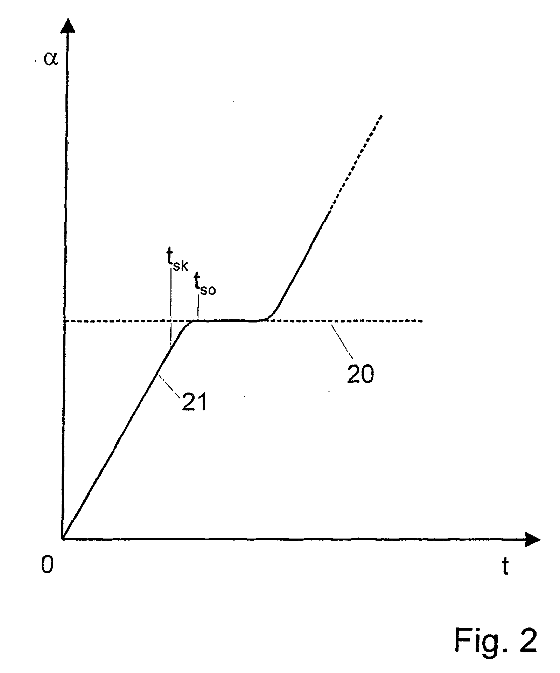

In Fig. 2 ist ein Verlauf 21 eines Stellwinkels $\alpha$ der Schwenkscheibe 7 über der Zeit aufgetragen. Zum Zeitpunkt $t_{sk}$ wird ein Schaltsignal ausgelöst, um eines oder mehrere Schaltelemente, d.h. die Schaltkupplungen mit Lamellen 11 - 14, zu schließen, so daß ein tatsächlicher Schaltpunkt $t_{so}$ erzielt wird, wenn eine Synchrondrehzahl bzw. ein Schaltwinkel $\alpha$ 20 erreicht wird.

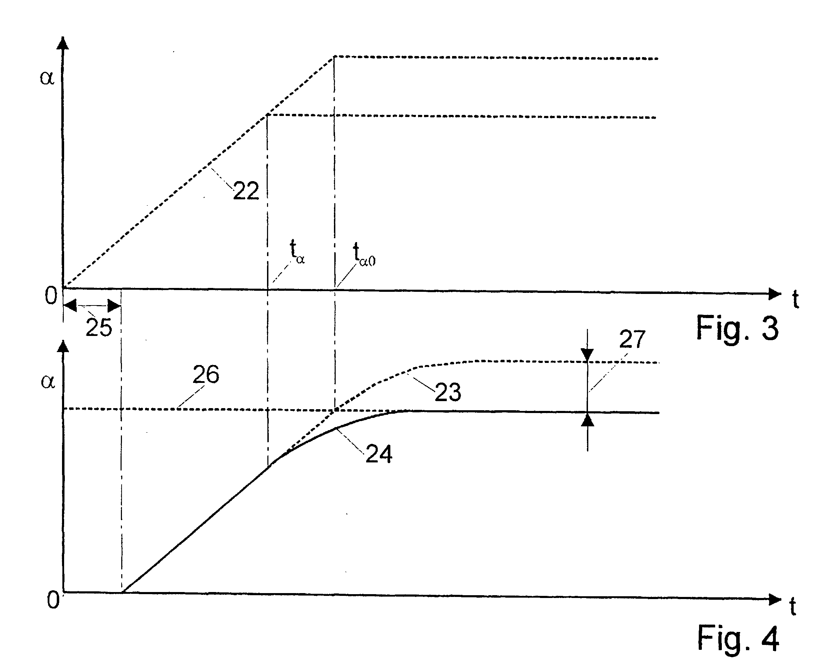

In Fig. 3 ist der Verlauf 22 eines Stellsignals über der Zeit aufgetragen. Direkt darunter ist in Fig. 4 zum Vergleich ein Verlauf 23 einer Schwenkscheibe 7 ohne und ein Verlauf 24 mit einer erfindungsgemäßen Steuereinheit über der Zeit dargestellt. Zu erkennen ist, daß erst nach einer gewissen Zeit 25, der sogenannten Nachlaufzeit, der Hydrostat 8 auf das Stellsignal reagiert. Wird ein Stoppsignal zu einem Zeitpunkt $t_{\alpha o}$ ausgelöst, vergeht ebenfalls ein Zeitraum bis die Schwenkscheibe 7 zum Stehen kommt. Wird im Zeitpunkt $t_{\alpha o}$ ein Zielwinkel 26 erreicht, verstellt sich die Schwenkscheibe 7 über den Zielwinkel 26 hinaus. Es entsteht ein Überschuß 27 der Hydrostatbetätigung, der den Gesamtwirkungsgrad verschlechtert. Um dies zu vermeiden, wird vorgeschlagen, an einem durch eine Steuereinheit berechneten Zeitpunkt ta ein Stoppsignal auszulösen, so daß sich die Schwenkscheibe 7 direkt auf den Zielwinkel 26 einstellt, wie dies im Verlauf 24 dargestellt ist.

Bezugszeichen

1 Antriebswelle
2 Zahnrad
3 Zahnrad
4 Zahnrad
5 Zahnrad
6 Verstellpumpe
7 Schwenkscheibe
8 Hydrostat
9 Hydromotor
10 Zahnrad
11 Schaltkupplung
12 Schaltkupplung
13 Schaltkupplung
14 Schaltkupplung
15 Abtriebswelle
16 Fahrantriebskegelrad
17 Abtriebswelle
18 Zahnrad
19 Zahnrad
20 Schaltwinkel
21 Verlauf
22 Verlauf
23 Verlauf
24 Verlauf
25 Zeit
26 Zielwinkel
27 Überschuß
$t_{sk}$ Zeitpunkt zum Auslösen eines Schaltsignals
$t_{so}$ Schaltpunkt
$t_{\alpha}$ Zeitpunkt zum Auslösen eines Stoppsignals
$t_{\alpha 0}$ Zeitpunkt zum Auslösen eins Stoppsignals
I Schwenkscheibensteuerstrom
$\alpha$ Schwenkscheibenwinkel

**Patentansprüche**

1. Verfahren zur Steuerung eines stufenlosen arbeitenden Verbundgetriebes

   - mit einem hydrostatischen Getriebe in Schwenkscheibenbauart,
   - mit einem Summierungsgetriebe,
   - mit einem mehrstufigen Schaltgetriebe mit hydraulisch betätigbaren kraftschlüssigen Schaltelementen (11-14), und
   - mit einer Steuereinheit,
   - wobei ein mechanischer Leistungszweig und ein über eine Schwenkscheibe (7) verstellbarer elektronisch gesteuerter hydraulischer Leistungszweig in dem Summiergetriebe summiert werden, und

   - wobei die Steuereinheit die Schaltelemente (11-14) und das hydrostatische Getriebe ansteuert, **dadurch gekennzeichnet, daß**
   - die Steuereinheit zeitlich vor Erreichen der für den Schaltpunkt benötigten Schalt- bzw. Synchrondrehzahl im stufenlos arbeitenden Verbundgetriebe ein Schaltsignal auslöst zum Schalten der hydraulisch betätigbaren kraftschlüssigen Schaltelemente (11-14), so daß der tatsächliche Schaltpunkt unmittelbar auf den Zeitpunkt fällt, bei dem die Synchrondrehzahl erreicht wird.

2. Verfahren zur Steuerung eines stufenlosen Getriebes nach Anspruch 1, **dadurch gekennzeichnet, daß** ein Zeitpunkt ($t_{sk}$) zum Auslösen eines Schaltsignals der Schaltelemente (11 - 14) abhängig von einer Winkelgeschwindigkeit der Schwenkscheibe (7) ermittelt wird.

3. Verfahren zur Steuerung eines stufenlosen Getriebes nach Anspruch 1, **dadurch gekennzeichnet, daß** ein Zeitpunkt ($t_{\alpha}$) zum Auslösen eines Stoppsignals der Schwenkscheibe (7) abhängig von einer Winkelgeschwindigkeit der Schwenkscheibe (7) ermittelt wird.

**Claims**

1. Method of controlling a steplessly operating compound transmission

   - comprising a hydrostatic transmission in swash-plate design,
   - comprising a summing transmission,
   - comprising a multi-stage selector gearbox comprising hydraulically actuable force-locked selector elements (11-14), and
   - comprising a control unit,
   - wherein a mechanical power branch and an electronically controlled hydraulic power branch that can be adjusted by means of a swash plate (7) are summed in the summing transmission,
   - wherein the control unit activates the selection elements (11-14) and the hydrostatic transmission, **characterized in that**
   - the control unit, prior to reaching the selection or synchronous rotational speed, needed for the selection point, in the steplessly operating compound transmission in time, triggers a selection signal for selecting the hydraulically actuable force-locked selection elements (11-14) so that the actual selection point falls immediately on the point in time at which the synchronous rotational speed is reached.

**2.** Method of controlling a stepless transmission according to Claim 1, **characterized in that** a point in time $(t_{sk})$ for triggering a selection signal of the selection elements (11-14) is determined as a function of an angular speed of the swash plate (7).

**3.** Method of controlling a stepless transmission according to Claim 1, **characterized in that** a point in time $(t_\alpha)$ for triggering a stop signal of the swash plate (7) is determined as a function of an angular speed of the swash plate (7).

**Revendications**

**1.** Procédé pour la commande d'une transmission composite travaillant avec réglage en continu, comprenant :

- un mécanisme hydrostatique du type de construction à plateau oscillant,
- un mécanisme additionneur,
- un mécanisme de changement à plusieurs étages qui comporte des éléments de changement commandés par une force et pouvant être actionnés hydrauliquement (11 - 14), et
- une unité de commande,
- dans lequel une branche de puissance mécanique et une branche de puissance hydraulique commandée électroniquement et pouvant être réglée au moyen d'un plateau oscillant (7) sont additionnées dans le mécanisme additionneur, et
- dans lequel l'unité de commande pilote les éléments de changement (11-14) et le mécanisme hydrostatique, **caractérisé en ce que**
- avant que la vitesse de rotation de changement ou synchrone nécessaire pour le point de changement commutation n'ait été atteinte dans le mécanisme composite travaillant avec un réglage en continu, l'unité de commande déclenche un signal de changement pour le changement des éléments de changement commandés par une force et pouvant être actionnés hydrauliquement (11-14), de sorte que le point de changement effectif tombe directement sur l'instant auquel la vitesse de rotation synchrone est atteinte.

**2.** Procédé pour la commande d'une transmission réglable en continu selon la revendication 1, **caractérisé en ce qu'**un instant $(t_{sk})$ pour le déclenchement d'un signal de changement des éléments de changement (11-14) est calculé en fonction d'une vitesse angulaire du plateau oscillant (7).

**3.** Procédé pour la commande d'une transmission réglable en continu selon la revendication 1, **carac-**

**térisé en ce qu'**un instant $(t_\alpha)$ pour le déclenchement d'un signal d'arrêt du plateau oscillant (7) est calculé en fonction d'une vitesse angulaire du plateau oscillant (7).

Fig. 1

Fig. 2

Fig. 3

Fig. 4